# EUROPÄISCHE PATENTANMELDUNG

(11) **EP 2 324 986 A2**
(43) Veröffentlichungstag der Anmeldung: **25.05.2011**
(21) Anmeldenummer: 10012417.1
(22) Anmeldetag: 30.09.2010
(51) Int. Cl.: B29C 47/10, B65D 1/48, B29C 47/06, B29C 51/02

(54) **Verfahren zur Herstellung eines Verpackungsbehälters und Verpackungsbehälter**

(30) Priorität: 23.11.2009 DE 202009015977 U
(71) Anmelder: Optipack GmbH, 86850 Aretsried (DE)
(72) Erfinder: Schmidt, Rene, 01917 Kamenz (DE)
(74) Vertreter: Leinweber & Zimmermann

(57) **Zusammenfassung**

Die Erfindung betrifft ein Verfahren zum Herstellen eines Verpackungsbehälters (50), bei dem ein Kunststoff-Ausgangsmaterial aufgeschmolzen und zum Erhalt einer Kunststofffolie (30,40) extrudiert wird, die anschließend in einem Umformprozess zu dem Verpackungsbehälter weiterverarbeitet wird. Zumindest einem Teil des Kunststoff-Ausgangsmaterials wird vor und/oder während des Extrusionsvorgangs ein Treibmittel derart zugesetzt, dass es zur Expansion des mit Treibmittel versetzten Extrudates bei Austritt aus der Extrusionsdüse, ggf. unter Freisetzung eines Treibgases, führt. Die Erfindung betrifft ferner einen auf diese Weise hergestellten Verpackungsbehälter (50) mit einer einen Behälterboden (56) und einen die seitliche Begrenzung des Behälters bildenden Behältermantel (54) aufweisenden Behälterwand (52), wobei die Behälterwand zumindest teilweise aus einem aufgeschäumten Kunststoffmaterial gebildet ist.

## Beschreibung

Die Erfindung betrifft ein Verfahren zum Herstellen eines Verpackungsbehälters, bei dem ein Kunststoff-Ausgangsmaterial aufgeschmolzen und zum Erhalt einer Kunststofffolie extrudiert wird, die anschließend in einem Umformprozess zu dem Verpackungsbehälter weiterverarbeitet wird. Außerdem bezieht sich die Erfindung auf einen nach diesem Verfahren hergestellten Verpackungsbehälter.

Extrusionsverfahren zur Herstellung von Verpackungsbehältern wie beispielsweise Plastikflaschen oder Plastikbechern sind bekannt. Üblicherweise werden dabei Kunststoff-Ausgangsprodukte in Granulatform, vor allem thermoplastische Polymere wie Polystyrol in einem Extruder durch Erwärmung und unter innerer Reibung aufgeschmolzen und unter Druck durch eine Extrusionsdüse gepresst, wobei das Extrusionsprofil der extrudierten Kunststoffmasse von dem Querschnitt der Extrusionsdüse abhängt.

Durch eine ringförmige Extrusionsdüse ist beispielsweise eine schlauchförmige Kunststofffolie erhältlich, die in einem weiteren Arbeitsschritt von einer Form umschlossen und unter Drucklufteinwirkung an die Formwand angepresst werden kann. Mithilfe solcher Extrusionsblasformen sind Hohlkörper wie Kunststoffflaschen oder Becher einfach herstellbar. Mithilfe einer schlitzförmigen Extrusionsdüse kann eine ebene Kunststofffolie extrudiert werden, die beispielsweise durch ein Thermoformverfahren zu einem Verpackungsbehälter weiterverarbeitet werden kann. Im diesem Zusammenhang werden unter durch Extrusionsverfahren gewonnenen Kunststofffolien üblicherweise Folien mit einer Dicke bis zu etwa 1,5 mm verstanden.

Es hat sich bei den genannten Herstellungsverfahren gezeigt, dass die extrudierte Kunststofffolie eine gewisse Mindestdicke aufweisen muss, damit der durch einen Umformvorgang aus der Folie erzeugte Verpackungsbehälter die notwendige Stabilität aufweist. Insbesondere muss ein Verpackungsbehälter zur Aufnahme von Nahrungsmitteln wie Milchprodukten und Joghurt widerstandsfähig gegen von außen, beispielsweise bei Transportvorgängen einwirkende Kräfte sein und die Nahrung. dicht einschließen. Bei Joghurtbechern liegt die Gesamtstärke einer zur Herstellung der Behälterwand verwendbaren Folie üblicherweise im Bereich von etwa 0,6 mm. Das dafür notwendige Kunststoffmaterial macht den Nahrungsbehälter jedoch schwer, was sowohl hohe Herstellungs- als auch Transportkosten mit sich bringt. Auch aus entsorgungstechnischen Gründen sind eine geringere Wandstärke und damit ein geringerer Kunststoffverbrauch vorzuziehen.Das Verwenden einer dünneren Kunststofffolie beispielsweise zur Herstellung von Joghurtbechern hat jedoch zu Stabilitätsproblemen der Becher, vor allem im Bereich des Siegelrandes der Becher geführt.

Angesichts dieser Probleme im Stand der Technik liegt der Erfindung die Aufgabe zugrunde, die Stabilität von Verpackungsbehältern zu erhöhen.

Erfindungsgemäß wird diese Aufgabe durch eine Weiterbildung des oben beschriebenen Herstellungsverfahrens gelöst, die im Wesentlichen dadurch gekennzeichnet ist, dass zumindest einem Teil des Kunststoff-Ausgangsmaterials vor und/oder während des Extrusionsvorgangs ein Treibmittel derart zugesetzt wird, dass es zur Expansion des mit Treibmittel versetzten Extrudates bei Austritt aus der Extrusionsdüse, ggf. unter Freisetzung eines Treibgases, führt.

Die Erfindung geht auf die Erkenntnis zurück, dass ein stabilerer Kunststoffbehälter unter Verbrauch derselben Menge an Kunststoff-Ausgangsmaterial hergestellt werden kann, wenn zumindest ein Teil der Kunststofffolie, aus der die Behälterwand geformt wird, in Form einer "Schaumfolie" aus aufgeschäumtem Kunststoffmaterial gebildet wird. Es hat sich nämlich gezeigt, dass eine Schaumfolie durch deren geschäumte Kunststoffstruktur mit wabenförmigen Wandstrukturen zwischen den einzelnen Poren des Schaums statische Eigenschaften aufweist, die mit denen eines Kranauslegers vergleichbar sind, dessen Quer-und Längsverstrebungen stabilisierend auf die Gesamtstruktur wirken.

Vorzugsweise weist das Kunststoff-Ausgangsmaterial Polyethylenterephtalat (PET) auf. Es hat sich nämlich gezeigt, dass aus entsorgungstechnischen Gründen die Verwendung von Polyethylenterephtalat der Verwendung von Polystyrol bei der Herstellung von Einweg-packungen vorzuziehen ist. PET weist jedoch eine höhere Dichte auf als Polystyrol, weshalb aus PET gefertigte Verpackungsbehälter schwerer und teurer bei der Herstellung sind als Polystyrol-Verpackungsbehälter derselben Form und-Wandstärke. Ein stabiler Verpackungsbehälter aus PET kann jedoch unter geringem Materialaufwand bereitgestellt werden, da eine zumindest in Teilbereichen aufgeschäumte Behälterwand aus PET, die aus einer zumindest teilweise aufgeschäumten PET-Folie hergestellt ist, .die nötige Stabilität bei geringem Materialaufwand gewährleistet und gleichzeitig durch die zumindest teilweise Aufschäumung das Gewicht des Verpackungsbehälters bei Verwendung gleicher Gesämtfolienstärke verringert ist.

Das Treibmittel, vorzugsweise ein Zitronensäure und/oder Natriumhydrogencarbonat aufweisendes stöchiometrisches Gemisch, kann zu diesem Zweck dem Kunststoff-Ausgangsmaterial in Batchform vor und/oder während des Extrusionsvorgangs zugesetzt werden. Durch einen chemischen Prozess wird anschließend unter Wärmeeinwirkung im Extruder ein die Kunststoffschmelze durchsetzendes Treibgas frei, das bei Austritt aus der Extrusionsdüse aufgrund der veränderten Druckbedingungen für die Expansion des Extrudates bei Austritt aus der Extrusionsdüse sorgt.

Es hat sich dabei als besonders zweckmäßig erwiesen, wenn die Kunststofffolie mehrschichtig, bevorzugt dreischichtig erzeugt wird. Die einzelnen Schichten der Behälterwand können so in Ihren Eigenschaften auf den Verwendungszweck abgestimmt werden.

Mehrschichtige Kunststofffolien können insbesondere durch Koextrusionsverfahren hergestellt werden, wobei mehrere artgleiche und/oder unterschiedliche Kunststoffschmelzen bei oder kurz vor dem Verlassen der Extrusionsdüse zusammengeführt werden. Dies ermöglicht die Herstellung einer Kunststoffolie mit auf den Verwendungszweck abgestimmten Eigenschaften. Beispielsweise kann bei Verpackungsbehältern eine innenliegende, d.h. eine die Innenoberfläche des Verpackungsbehälters bildende Schicht besonders diffusionsdicht hergestellt sein und eine außenliegende Schicht besonders widerstandsfähig gegenüber mechanischen Belastungen ausgelegt sein. Insbesondere sollte eine innenliegende Schicht eines Verpackungsbehälters, beispielsweise eines Joghurtbechers besonders glatt sein, um ein Auslöffeln des Behälters zu erleichtern und das Anhaften von Nahrungsresten in/an Unebenheiten der Oberfläche zu verhindern.

Nach Extrusion oder Koextrusion der zumindest teilweise aufgeschäumten Kunststofffolie wird ein erfindungsgemäßer Verpackungsbehälter in einem Umformprozess hergestellt. Der Umformprozess weist vorzugsweise ein Tiefziehverfahren bzw. ein Thermoformverfahren auf. Dabei wird die Kunststofffolie einer Thermoformvorrichtung zugeführt, wobei die noch warme und dadurch dehnbare Folie direkt im Anschluss an das Extrusionsverfahren einem Thermoformwerkzeug zugeführt werden kann oder eine abgekühlte Folie vor dem Thermoformverfahren zusätzlich erwärmt werden kann. Die warme Folie wird dann schnell an die gekühlte Wandung eines Formwerkzeuges gebracht und nimmt so bei dem Abkühlvorgang dauerhaft dessen Form an. In einem weiteren Schritt kann die gebildete Kunststoffform ausgestanzt werden.

Auch ein Extrusionsblasverfahren, bei dem der Verpackungsbehälter aus der Kunststofffolie mithilfe einer Extrusionsblasform, ggf. direkt im Anschluss an den Extrusionsvorgang hergestellt wird, ist möglich. Hierzu liegen jedoch vorzugsweise eine ringförmige Extrusionsdüse und damit ein schlauchförmiges Extrudat vor.

Die Stabilität des gemäß dem erfindungsgemäßen Verfahren hergestellten Behälters kann unter Verringerung des. Kunststoffverbrauches weiter erhöht werden, indem im Anschluss an den Umformprozess eine Manschette um den fertig geformten Verpackungsbehälter gewickelt wird, so dass die Manschette zumindest teilweise an einer Außenfläche einer Behälterwand anliegt und diese verstärkt. Die Manschette kann die Behälterwand banderolenartig umschließen und die Verpackungsbehälterwand somit stützen. Durch eine bspw. aus Papier gebildete Manschette wird zusätzlich der. Behälterinhalt länger warm bzw. kalt gehalten, da ein Wärmeaustausch durch die Behälterwand hindurch verlangsamt wird. Ferner verbrennt sich bei einem heißen Behälterinhalt der Benutzer des Behälters bei Ergreifen des Behälters nicht so schnell die Finger, da er lediglich die aus Papier gebildete Manschette berührt.

Aus Umweltgesichtspunkten ist es vorteilhaft, wenn die Manschette bspw. durch Ansiegeln oder Ankleben lösbar an der Behälterwand befestigt wird. Der Verwender kann dann die meist aus Papier gebildete Manschette und den aus Kunststoff gebildeten Behälter getrennt voneinander entsorgen. Zu diesem Zweck kann eine Solltrennlinie an der Manschette vorgesehen sein, entlang der die Manschette durchtrennt und abgenommen werden kann.

Zusätzlich wird zweckmäßigerweise ein Bodenteil an einen Behälterboden angelegt und bevorzugt durch Umbördeln eines unteren Randes der Manschette mit der Manschette verbunden. Alternativ oder zusätzlich kann das Bodenteil mit dem Behälterboden verklebt oder daran angesiegelt werden. Das Bodenteil kann aus einer ebenen Materialbahn ausgestanzt oder ausgeschnitten werden und ebenso wie die Manschette aus ggf. bedrucktem und/oder beschichtetem Papier oder Karton bestehen. '

Die Erfindung betrifft ferner einen nach dem erfindungsgemäßen Verfahren hergestellten Verpackungsbehälter mit einer einen Behälterboden und einen die seitliche Begrenzung des Behälters bildenden Behältermantel aufweisenden Behälterwand. Die aus der extrudierten Kunststofffolie gebildete Behälterwand ist zumindest teilweise aus einem aufgeschäumten Kunststoffmaterial gebildet.

Vorzugsweise weist das Kunststoffmaterial Polyethylenterephtalat (PET) auf. Wie oben beschrieben kann ein stabiler Verpackungsbehälter aus PET unter geringem Materialaufwand bereitgestellt werden, wenn die Behälterwand aus einer zumindest in Teilbereichen aufgeschäumten PET-Folie hergestellt ist. So kann nötige Stabilität gewährleistet und gleichzeitig durch die zumindest teilweise Aufschäumung das Gewicht des Verpackungsbehälters bei Verwendung gleicher Gesamtfolienstärke gering gehalten werden. Gleichzeitig ist aus entsorgungstechnischen Gründen die Verwendung von Polyethylenterephtalat der Verwendung von Polystyrol vorzuziehen.

Ein erfindungsgemäßer Verpackungsbehälter kann besser auf den Verwendungszweck abgestimmt werden, wenn die Behälterwand zumindest teilweise mehrschichtig, bevorzugt dreischichtig gebildet ist. Eine mehrschichtige Kunststofffolie wird bevorzugt durch ein Koextrusionsverfahren hergestellt.

Vorzugsweise weist eine innere Schicht der Behälterwand, d.h. eine zwischen zwei anderen Schichten der Behälterwand liegende Schicht, eine geringere geometrische Dichte auf als die die innere Schicht umgebenden Schichten, insbesondere als die Oberflächenschichten der Behälterwand. Üblicherweise werden die Oberflächenschichten der Behälterwand mechanisch stärker beansprucht als innere Schichten der Behälterwand, so dass an der Oberfläche der Behälterwand Kunststoffschichten höherer Dichte, die üblicherweise mechanisch stärker belastbar ist als Kunststoffschichten geringerer Dichte, sinnvoll sind.

Es hat sich dabei als besonders zweckmäßig erwiesen, wenn eine innere Schicht der Behälterwand zumindest teilweise aus einem aufgeschäumten Kunststoffmaterial besteht und die Oberflächenschichten der Behälterwand bevorzugt aus ungeschäumtem Kunststoffmaterial bestehen. Die Aufschäumung einer inneren Schicht der Kunststofffolie kann durch Zugabe eines Treibmittels zu dem diese Schicht bildenden Kunststoff-. Ausgangsmaterial vor und/oder während des Extrusionsverfahrens bewirkt werden. Wenn innere Schicht und die die innere Schicht umgebenden Schichten bzw. die Oberflächenschichten aus dem gleichen Kunststoff-Ausgangsmaterial hergestellt werden, wobei dem die innere Schicht bildenden Kunststoff-Ausgangsmaterial ein Treibmittel zugegeben wird, weist die innere Schicht nach Extrusion eine geringere geometrische Dichte auf als die die innere Schicht umgebenden Schichten, bzw. als die Oberflächenschichten der Behälterwand. Wenn die Folie dreischichtig aufgebaut ist, weist der aus der Folie hergestellte Verpackungsbehälter dann eine sandwichartige Behälterwandstruktur auf, bei der eine aufgeschäumte innere Folienschicht von ungeschäumten und somit eine höhere geometrische Dichte- aufweisenden Oberflächenschichten umgeben ist. Durch diesen "Sandwicheffekt" erfolgt eine zusätzliche Stabilisierung der Behälterwand. Gleichzeitig weist ein aus einer derartigen Folie hergestellter Verpackungsbehälter glatte Oberflächen auf, ist aber durch die geschäumte "Mittelschicht" des Materials deutlich leichter als ein aus Vollkunststoff bestehender Behälter gleicher Wandstärke.

Vorzugsweise beträgt die Stärke der aufgeschäumten Schicht 50% bis 90%, insbesondere etwa 80% der Gesamtstärke der Behälterwand. Auf diese Weise kann ein stabiler Verpackungsbehälter unter geringem Materialaufwand hergestellt werden.

Im Rahmen der Erfindung hat es sich weiter als besonders zweckmäßig erwiesen, wenn eine innere Schicht der Behälterwand eine Stärke im Bereich von 0,1 - 1 mm, bevorzugt 0,4 - 0,6 mm, insbesondere 0,48 mm aufweist und die beiden Oberflächenschichten der Behälterwand jeweils Stärken im Bereich von 0,01 - 0,1 mm, bevorzugt 0,04 - 0,08 mm, insbesondere 0,06 mm aufweisen. Diese Schichtstärken eignen sich besonders für die Herstellung eines Kunststoffbechers und gewähren die notwendige Stabilität.

Ein erfindungsgemäßer Verpackungsbehälter kann besonders kostengünstig hergestellt werden, wenn alle Schichten der Behälterwand zumindest teilweise aus PET bestehen. In diesem Fall muss nämlich nur eine Art von Kunststoff-Ausgangsmaterial vor der Herstellung bereitgestellt werden.

Eine aufgeschäumte Schicht der Behälterwand weist dabei vorzugsweise eine geometrische Dichte im Bereich von 0,5 - 1,2 g/cm³, bevorzugt 0,8 - 1 g/cm³ auf. Es hat sich nämlich herausgestellt, dass ein PET-Verpackungsbehälter mit dreischichtiger Behälterwand, deren Mittelschicht etwa 80% der Gesamtwandstärke ausmacht und infolge von Aufschäumung die genannte geometrische Dichte aufweist, besonders leicht und gleichzeitig ausreichend stabil ist. Ungeschäumtes PET weist eine Dichte von etwa 1,33 g/cm³ auf.

Vorzugsweise ist ein erfindungsgemäßer Verpackungsbehälter ein Kunststoffbecher, und dient bevorzugt der Aufnahme von Milchprodukten, insbesondere der Aufnahme von Joghurt.

Der Behältermantel des Verpackungsbehälters kann in einer etwa parallel zum Behälterboden verlaufenden Schnittebene eine beliebige Struktur aufweisen, insbesondere eckig, rund oder oval sein. Wenn der Verpackungsbehälter ein Kunststoffbecher ist, weist der Behältermantel in einer etwa parallel zum Behälterboden verlaufenden Schnittebene bevorzugt eine runde Struktur auf. Der Behältermantel kann dann zumindest teilweise (kreis)zylindermantelförmig und/oder kegelstumpfmantelförmig sein, wodurch das Auslöffeln des Bechers erleichtern werden kann. Außerdem kann ein rotationssymmetrischer Verpackungsbehälter besonders einfach und kostengünstig hergestellt werden.

Vorzugsweise weist dabei die Behälterwand an der dem Behälterboden abgewandten Seite des Behältermantels einen bevorzugt etwa parallel zu dem Behälterboden verlaufenden Siegelrand auf. Insbesondere im Bereich dieses Siegelrandes ist eine stabile' Ausführung der Behälterwand wichtig, da der Siegelrand besonderen mechanischen Belastungen ausgesetzt ist. Insbesondere im Bereich des Siegelrandes besteht die Behälterwand also vorzugsweise zumindest teilweise aus einem aufgeschäumten Kunststoffmaterial.

In einer alternativen Ausführungsform kann der Verpackungsbehälter als Kunststoffmaterial Polystyrol (PS) und/oder Polypropylen (PP) aufweisen. Diese beiden Kunststoffe haben eine geringere Dichte als PET, so dass ein vollständig aus diesen Kunststoffen gebildeter Behälter besonders leicht ist. Ein aus PS oder PP hergestellter Verpackungsbehälter weist vorzugsweise eine dreischichtige Behälterwand mit aufgeschäumter Mittelschicht auf, wobei die Stärke der Mittelschicht etwa 63% der Gesamtstärke der Behälterwand und die Stärken der beiden Oberflächenschichten jeweils etwa 18% betragen können. Das Verhältnis zwischen aufgeschäumter . Kunststoffmenge und ungeschäumter Kunststoffmenge kann also bei Verwendung von PP oder PS kleiner sein als bei Verwendung von PET, wenn Behälter gleicher Form und gleichen Gewichtes herzustellen sind.

Im Hinblick auf einen besonders geringen Kunststoffverbrauch bei gleichzeitig hoher Stabilität des Behälters hat sich eine zusätzliche Verstärkung der Behälterwand durch eine den Behältermantel verstärkende und zumindest teilweise an einer Außenfläche des Behältermantels anliegende Manschette als vorteilhaft erwiesen. Die Manschette wird im Anschluss an den Umformprozess zur Herstellung des Behälters an eine Außenfläche des Behälters angelegt und dort ggf. durch Kleben oder Siegeln mit der Behälterwand verbunden.

Die Manschette erstreckt sich vorzugsweise ausgehend von dem Behälterboden .in Richtung auf den Siegelrand des Behälters und umschließt den Behältermantel zumindest teilweise rohrartig. Die Form der Manschette ist dabei an die Form des Behältermantels angepasst. So verjüngt sich bspw. die an einen Behälter in Form eines konusförmigen Bechers anlegbare Manschette in Richtung auf den Behälterboden. Andere Behälter- und Manschettenformen sind ebenso gut denkbar.

Zusätzlich kann der Behälter durch ein den Behälterboden verstärkendes, zumindest teilweise an einer Außenfläche des Behälterbodens anliegendes und vorzugsweise mit der Manschette verbundenes Bodenteil stabilisiert sein.

In einer besonders bevorzugten Ausführungsform der Erfindung weist die Manschette und/oder das Bodenteil bevorzugt beschichtetes und/oder bedrucktes Kartonmaterial oder Papier auf. Vorzugsweise ist die Manschette im Wesentlichen vollständig aus Papier gebildet und kann einseitig oder beidseitig bedruckt und/oder beschichtet sein. Die Beschichtung kann bspw. zum Schutz der Bedruckung vor Abrieb und zum Schutz des Papiers vor Feuchtigkeit vorgesehen sein.

In der folgenden Beschreibung wird die Erfindung unter Bezugnahme auf die Zeichnung beispielhaft erläutert. In der Zeichnung zeigt:
Fig. 1, eine schematische Skizze des erfindungsgemäßen Verfahrens zur Herstellung eines Verpackungsbehälters,
Fig. 2a eine schematische Schnittansicht durch eine dreischichtige Kunststäfffolie nach Extrusion bzw. durch die Behälterwand eines erfindungsgemäßen Verpackungsbehälters mit einem ersten Schichtaufbau,
Fig. 2b eine schematische Schnittansicht durch eine dreischichtige Kunststoffolie nach Extrusion bzw. durch die Behälterwand eines erfindungsgemäßen Verpackungsbehälters mit einem zweiten Schichtaufbau,
Fig. 3a eine Seitenansicht eines erfindungsgemäßen Verpackungsbehälters,
Fig. 3b einen an einen erfindungsgemäßen Verpackungsbehälter anlegbaren Faltbogen zum Bilden einer Manschette,
Fig. 3c den erfindungsgemäßen Verpackungsbehälter aus Fig. 3a nach Anlegen der Manschette aus Fig. 3b.

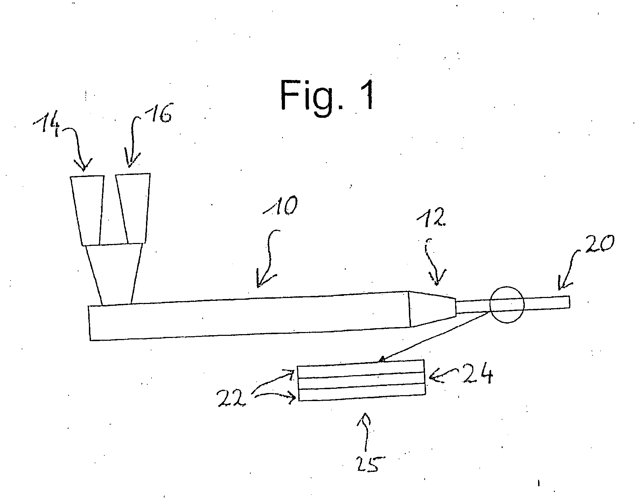

In Fig. 1 sind schematisch ein Extruder 10 mit einer Extrusionsdüse 12 an dessen vorderen Ende und zwei Zuführbehältern 14 und 16 zur Zuführung des Ausgangsmaterials dargestellt. Zuführbehälter 14 kann der Zuführung von Kunststoff-Ausgangsmaterial, beispielsweise in Form von PET-Granulat, Zuführbehälter 16 der Zuführung einer Schaumkomponente, beispielsweise in Form einer Mischung von PET-Granulat mit einem Treibmittel, dienen. Das Treibmittel kann beispielsweise Zitronensäure enthalten.

Im Extruder 10 wird das PET-Granulat durch Erwärmung und unter innerer Reibung aufgeschmolzen und zum Erhalt einer Kunststofffolie 20 durch die Extrusionsdüse 12 gepresst. Die Kunststofffolie wird in einem späteren Verfahrensschritt zu der Behälterwand eines erfindungsgemäßen Verpackungsbehälters weiterverarbeitet.

Zum Erhalt einer mehrschichtigen Kunststofffolie 20 kann ein Koextrusionsverfahren verwendet werden, bei dem verschiedene Kunststoff-Ausgangsmaterialien während oder kurz nach dem Austritt aus der Extrusionsdüse 12 zusammengeführt werden. Beispielsweise kann ein erstes Kunststoffmaterial ein Treibmittel enthalten, das zur Expansion des mit Treibmittel versetzten Extrudates bei Austritt aus der Extrusionsdüse, ggf. unter Freisetzung eines Treibgases, führt. Das aufgeschäumte Kunststoffmaterial kann bei Verwendung einer geeigneten Extrusionsdüse die innere Schicht 24 einer dreischichteigen Kunststofffolie 25 bilden. Die Oberflächenschichten 22 der dreischichtigen Kunststofffolie 25 können unter Verwendung eines Kunststoff-Ausgangsmaterials ohne Zugabe eines Treibmittels extrudiert werden und somit ungeschäumt sein.

Aus der dreischichtigen Folie 25 wird in einem Umformprozess, der ein Thermoformverfahren aufweisen kann, ein erfindungsgemäßer Verpackungsbehälter hergestellt.

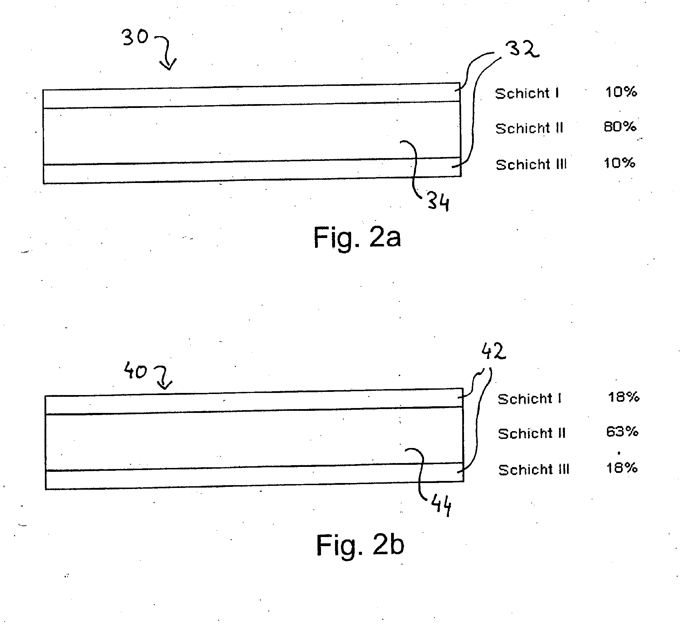

In den Figuren 2a und 2b ist jeweils ein Schnitt durch eine gemäß dem erfindungsgemäßen Verfahren extrudierte Kunststofffolie 30, 40, bzw. durch die. Behälterwand 52 eines erfindungsgemäßen Verpackungsbehälters mit drei Schichten gezeigt. Die mittlere Schicht 34, 44 besteht dabei jeweils aus aufgeschäumtem Kunststoff und weist eine größere Stärke auf als die beiden Oberflächenschichten 32, 42.

Die in Fig. 2a gezeigte Kunststofffolie ist aus PET gebildet, während die in Fig. 2b gezeigte Kunststofffolie aus PS oder PP gebildet ist. Bei der aus PET gebildeten Kunststofffolie der Fig. 2a weist die aufgeschäumte Mittelschicht etwa 80% der Gesamtstärke der Kunststofffolie auf und jede der beiden Oberflächenschichten weist etwa 10% der Gesamtstärke auf. Die Stärke der aufgeschäumten Mittelschicht beträgt etwa 0,48 mm und die Stärken der Oberflächenschichten jeweils etwa 0,06 mm.

Dagegen weist die aus PS oder PP gebildete, aufgeschäumte Mittelschicht der Fig. 2b etwa 63% der Gesamtstärke der Kunststofffolie auf. Einer der Gründe hierfür ist die größere Dichte und von PET gegenüber der Dichte von PS und PP, so dass zum Zwecke der Gewichtsverringerung des Verpackungsbehälters bei Verwendung von PET eine besonders hohe Stärke der (leichteren) aufgeschäumten Schicht sinnvoll ist. Es hat sich nämlich herausgestellt, dass durch die Wabenstruktur des aufgeschäumten Kunststoffes die Stabilität der Behälterwand trotz Aufschäumung bei etwa gleicher Gesamtstärke nicht beeinträchtigt ist. Bei Verwendung von PP oder PS kann dagegen aufgrund des ohnehin geringeren Gewichtes dieser Kunststoffe eine größere Stärke der ungeschäumten Oberflächenschichten sinnvoll sein.

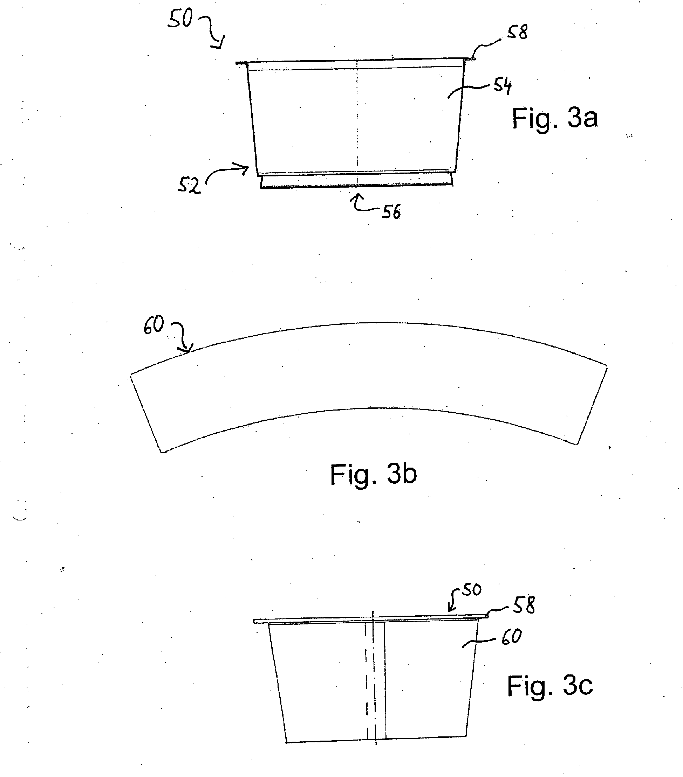

In Fig. 3a ist ein erfindungsgemäßer Verpackungsbehälter 50 mit einem Behälterboden 56 und einem die seitliche Begrenzung des Behälters bildenden Behältermantel 54 dargestellt. Der Verpackungsbehälter 50 ist ein Kunststoffbecher zur Aufnahme von Lebensmitteln wie etwa Milchprodukten. Behälterboden und Behältermantel sind aus einer teilweise aufgeschäumten Kunststofffolie hergestellt, wie sie bspw. in Fig. 2 dargestellt ist, und sind damit zumindest teilweise aus einem aufgeschäumten Kunststoffmaterial gebildet. Als besonders geeigneter Kunststoff hat sich in diesem Zusammenhang PET erwiesen, allerdings können auch Polystyrol und/oder Polypropylen in vorteilhafter Weise zum Einsatz kommen. Denn PP und PS haben eine geringere Dichte als PET, und die daraus hergestellten Verpackungsbehälter sind demnach besonders leicht.

Insbesondere im Bereich des Siegelrandes 58 des Bechers sollte die Behälterwand 52 besonders stabil ausgeführt sein, damit durch die beim Öffnen des Bechers auf den Siegelrand wirkende Kraft keine Schäden am Becher verursacht werden. Eine in diesem Bereich teilweise aufgeschäumte Behälterwand 52 bietet diese erforderliche Stabilität.

Die Stabilität des Verpackungsbehälters erhöht sich weiter, wenn der Behältermantel umfangsseitig durch eine Manschette 60 verstärkt wird. Die Manschette kann aus einem ebenen Faltbogen hergestellt werden, wie er in Fig. 3b dargestellt ist. Als Material für die Manschette haben sich Papier und/öder Kartonmaterial als besonders vorteilhaft erwiesen. Das Papier kann mit Beschriftungen, Bildern oder dgl. bedruckt und/oder zum Schutz vor Feuchtigkeit einseitig oder beidseitig beschichtet sein.

Der Faltbogen kann an einem seitlichen Rand mit Klebstoff versehen werden und zur Bildung der den Behältermantel umlaufenden Manschette an den Verpackungsbehälter angelegt werden, wobei durch die beiden sich überlappenden seitlichen Ränder des Faltbogens eine Überlappungsnaht gebildet wird. Zusätzlich können Manschette und Behälter durch Verkleben und/oder Versiegeln lösbar miteinander verbunden werden. Auf diese Weise kann der Verbraucher die meist aus Papier gebildete Manschette von dem aus Kunststoff gebildeten Behälter trennen und beide Teile getrennt entsorgen. Der Leim kann nach Auftragen bspw. mit einer Heißluftdüse vorgetrocknet werden. Die Manschette kann durch Schließschalen an den auf einen Dorn aufgesteckten Behälter angedrückt werden, so dass sich die Überlappungsnaht bildet, an der zwei seitliche Ränder der Manschette überlappend miteinander verklebt oder aneinander angesiegelt sind. Anschließend kann ein unterer Rand der Manschette zur Anlage an dem Behälterboden nach innen umgebördelt werden

Durch Anlegen der Manschette wird die Stabilität des Verpackungsbehälters weiter erhöht. Aus diesem Grund kann die Stärke der Behälterwand eines derart hergestellten Verpackungsbehälters besonders gering gehalten werden und der Kunststoffverbrauch kann so weiter minimiert werden.

Zusätzlich kann der Behälterboden mit einem bevorzugt zumindest teilweise an dem Behälterboden anliegenden Bodenteil (nicht gezeigt) verstärkt werden. Das Bodenteil kann bspw. aus einer Materialbahn, aus der auch die Manschette hergestellt wird, ausgestanzt werden und an den Behälterboden angeklebt und/oder angesiegelt werden. Alternativ oder zusätzlich kann eine Befestigung des Bodenteils an der Manschette vorgesehen sein. Hierzu kann bspw. ein unterer Rand der Manschette um einen Rand des Bodenteils nach innen gebördelt werden. Anschließend kann der Becher einem Walzwerkzeug zugeführt werden, in dem die endgültige Verbindung zwischen Behälter, Manschette und Bodenteil hergestellt wird und in dem der Behälter im Bodenbereich seine endgültige Form erhält.

Ein erfindungsgemäßer Verpackungsbehälter ist nicht auf die beschriebene Ausführungsform beschränkt. Vielmehr ist es für den Fachmann offensichtlich, dass durch anders geformte und/oder eine Behälterwand aus weniger oder mehr Schichten aufweisende Verpackungsbehälter die entsprechende Wirkung erzielt und genannte Stabilitätsvorteile erlangt werden können. Auch eine weitere Beschichtung oder Bemalung/Beklebung der Behälterwand ist denkbar.

## Patentansprüche

1. Verfahren zum Herstellen eines Verpackungsbehälters (50), bei dem ein Kunststoff-Ausgangsmaterial aufgeschmolzen und zum Erhalt einer Kunststofffolie (30, 40) extrudiert wird, die anschließend in einem Umformprozess zu dem Verpackungsbehälter weiterverarbeitet wird, dadurch gekenntzeichnet, dass zumindest einem Teil des Kunststoff-Ausgangsmaterials vor und/oder während des Extrusionsvorgangs ein Treibmittel derart zugesetzt wird, dass es zur Expansion des mit Treibmittel versetzten Extrudates bei Austritt aus der Extrusionsdüse, ggf. unter Freisetzung eines Treibgases, führt.

2. Verfahren nach Anspruch 1, **dadurch gekennzeichnet, dass** das Kunststoff-Ausgangsmaterial Polyethylenterephtalat (PET) aufweist.

3. Verfahren nach Anspruch 1 oder 2, **dadurch gekennzeichnet, dass** das Treibmittel Zitronensäure und/oder Natriumhydrogencarbonat aufweist.

4. Verfahren nach einem der Ansprüche 1 bis 3, **dadurch gekennzeichnet, dass** die Kunststofffolie (30, 40) mehrschichtig, bevorzugt dreischichtig erzeugt wird, was insbesondere durch ein Koextrusionsverfahren geschehen kann.

5. Verfahren nach einem der Ansprüche 1 bis 4, **dadurch gekennzeichnet, dass** der Umformprozess ein Tiefziehverfahren, bzw. ein Thermoförmverfahren aufweist.

6. Verfahren nach einem der Ansprüche 1 bis 5, **dadurch gekennzeichnet, dass** im Anschluss an den Umformprozess eine Manschette (60) derart an den fertiggeformten Verpackungsbehälter (50) angelegt wird, dass die Manschette zumindest teilweise an einer Außenfläche einer Behälterwand (52) anliegt und diese verstärkt.

7. Verfahren nach Anspruch 6, **dadurch gekennzeichnet dass** die Manschette durch Siegeln und/oder Kleben lösbar an der Behälterwand befestigt wird.

8. Verfahren nach Anspruch 6 oder 7, **dadurch gekennzeichnet, dass** ein Bodenteil an einen Behälterboden des Behälters angelegt wird und bevorzugt durch Umbördeln eines unteren Randes der Manschette mit der Manschette verbunden wird.

9. Verpackungsbehälter (50), insbesondere hergestellt durch ein Verfahren nach einem der Ansprüche 1 bis 8, mit einer einen Behälterboden (56) und einen die seitliche Begrenzung des. Behälters bildenden Behältermantel (54) aufweisenden Behälterwand (52), **dadurch gekennzeichnet, dass** die Behälterwand zumindest teilweise aus einem aufgeschäumten Kunststoffmaterial gebildet ist..

10. Verpackungsbehälter nach Anspruch 9, **dadurch gekennzeichnet, dass** das Kunststoffmaterial Polyethylenterephtalat (PET) aufweist.

11. Verpackungsbehälter nach Anspruch 9 oder 10, **dadurch gekennzeichnet, dass** die Behälterwand zumindest teilweise mehrschichtig, bevorzugt dreischichtig ist.

12. Verpackungsbehälter nach Anspruch 11, **dadurch gekennzeichnet, dass** eine innere Schicht (34, 44) der Behälterwand eine geringere geometrische Dichte aufweist als die die innere Schicht umgebenden Schichten (32, 42), insbesondere als die Oberflächenschichten der Behälterwand.

13. Verpackungsbehälter nach Anspruch 11 oder 12, **dadurch gekennzeichnet, dass** eine innere Schicht (34, 44) der Behälterwand zumindest teilweise aus einem aufgeschäumten Kunststoffmaterial besteht und die Oberflächenschichten (32, 42) der Behälterwand bevorzugt aus ungeschäumtem Kunststoffmaterial bestehen.

14. Verpackungsbehälter nach einem der Ansprüche 11 bis 13, **dadurch gekennzeichnet, dass** die Stärke der aufgeschäumten Schicht (34, 44) 50% bis 90%, insbesondere etwa 80% der Gesamtstärke der Behälterwand beträgt.

15. Verpackungsbehälter nach einem der Ansprüche 11 bis 14, **dadurch gekennzeichnet, dass** eine innere Schicht (34, 44) der Behälterwand eine Stärke im Bereich von 0,1 - 1 mm, bevorzugt 0,4 - 0,6 mm, insbesondere 0,48 mm aufweist und die Oberflächenschichten (32, 42) der Behälterwand Stärken im Bereich von 0,01 - 0,1 mm, bevorzugt 0,04 - 0,08 mm, insbesondere 0,06 mm aufweisen.

16. Verpackungsbehälter nach einem der Ansprüche 11 bis 15, **dadurch.gekennzeichnet, dass** alle Schichten der Behälterwand zumindest teilweise aus PET bestehen.

17. Verpackungsbehälter nach einem der Ansprüche 11 bis 16, **dadurch gekennzeichnet, dass** eine aufgeschäumte Schicht (34, 44) der Behälterwand eine geometrische Dichte im Bereich von 0,5 -1,2 g/cm³, bevorzugt 0,8 - 1 g/cm³ aufweist.

18. Verpackungsbehälter nach einem der Ansprüche 9 bis 17, **dadurch gekennzeichnet, dass** der Verpackungsbehälter ein Kunststöffbecher ist und bevorzugt der Aufnahme von Milchprodukten, insbesondere der Aufnahme von Joghurt dient.

19. Verpackungsbehälter nach einem der Ansprüche 9 bis 18, **dadurch gekennzeichnet, dass** die Behälterwand (52) an der dem Behälterboden (56) abgewandten Seite des Behältermantels einen bevorzugt etwa parallel zu dem Behälterboden verlaufenden Siegelrand (58) aufweist.

20. Verpackungsbehälter nach einem der Ansprüche 9 bis 19, **dadurch gekennzeichnet, dass** das Kunststoffmaterial Polystyrol (PS) und/oder Polypropylen (PP) aufweist.

21. Verpackungsbehälter nach einem der Ansprüche 9 bis 20, **gekennzeichnet durch** eine den Behältermantel (54) verstärkende und zumindest teilweise an einer Außenfläche des Behältermantels anliegende Manschette (60).

22. Verpackungsbehälter nach Anspruch 21, **dadurch gekennzeichnet, dass** die Manschette sich ausgehend von dem Behälterboden in Richtung auf den Siegelrand erstreckt und den Behältermantel zumindest teilweise rohrartig umschließt.

23. Verpackungsbehälter nach Anspruch 21 oder 22, **gekennzeichnet durch** ein den Behälterboden (56) verstärkendes, zumindest teilweise an einer Außenfläche des Behälterbodens anliegendes und bevorzugt mit der Manschette (60) verbundenes Bodenteil.

24. Verpackungsbehälter nach einem der Ansprüche 21 bis 23, **dadurch gekennzeichnet, dass** die Manschette (60) und/oder das Bodenteil bevorzugt beschichtetes und/oder bedrucktes Kartonmaterial oder Papier aufweisen.
